# EUROPEAN PATENT SPECIFICATION

(11) **EP 3 697 525 B1**
(45) Date of publication and mention of the grant of the patent: **27.03.2024**
(21) Application number: 18785389.0
(22) Date of filing: 17.10.2018
(51) Int. Cl.: C08K 5/053, C08K 5/00

(54) **LIQUID DROPLET POLYMER COMPOSITE COMPOSITIONS AND METHODS FOR THEIR PRODUCTION**
FLÜSSIGE TRÖPFCHENPOLYMERVERBUNDZUSAMMENSETZUNGEN UND VERFAHREN ZU DEREN HERSTELLUNG
COMPOSITIONS DE COMPOSITE POLYMÈRE DE GOUTTELETTES LIQUIDES ET LEURS PROCÉDÉS DE PRODUCTION

(30) Priority: 19.10.2017 EP 17197227
(43) Date of publication of application: 26.08.2020
(73) Proprietor: Spano, Fabrizio, 4053 Basel (CH); Faccio, Greta, 9000 St. Gallen (CH)
(72) Inventor: SPANO, Fabrizio, 9422 Staad (CH); FACCIO, Greta, 9000 St. Gallen (CH); ROSSI, René, 9500 Wil (CH)
(74) Representative: Kasche & Partner
(86) International application number: PCT/EP2018/078328
(87) International publication number: WO 2019/076944

(56) References cited:
- US-A1- 2008 175 918
- US-A1- 2017 218 167
- MAZUREK P ET AL: "Green silicone elastomer obtained from a counterintuitively stable mixture of glycerol and PDMS", POLYMER, vol. 87, 28 January 2016 (2016-01-28), pages 1-7, XP029461497, ISSN: 0032-3861, DOI: 10.1016/J.POLYMER.2016.01.070 cited in the application

## Description

The present invention is directed to a method for the controlled deposition of liquid droplets in polymer compositions for forming droplet polymer composite compositions, comprising the steps of time-controlled settlement of deposited discrete liquid droplets within an unpolymerized pre-polymer composition, and controlled polymerization of the pre-polymer composition comprising the settling discrete droplets. The present invention further relates to droplet-loaded polymer material prepared by said method as well as to the use of said material for preparing, e.g. drug delivery materials, synthetic organs, microreactors for chemical reactions, multiunit storage reservoirs, filter materials, exchange materials, magnetic materials, photonic crystals, data storage devices or simple substance storage devices.

### Background of the invention

The introduction of chambers, channels and cages in materials is a challenging step towards, for example, complex lab-on-chip architectures, metamaterials, flexible sensors, stretchable electronics, soft composites, mobile structures, and soft robots. Compartmentalization and miniaturization can benefit biomolecules and reactions, e.g. by confining these in a closed, isolated and thus contamination-free environment, or by the possibility of easily accessing a large number of samples each with different reaction conditions. Droplets are indeed complex systems characterized by an internal high mobility of the component molecules that can be functionalized to acquire life-like characteristics. By tailoring the composition and the surface tension, 'active' droplets of sizes ranging from nano- to milliliters and able to self-divide, self-replicate, or migrate along chemical gradients can be assembled. A high-throughput platform for crystallization and screening has been reported in which nanoliter-scale droplets are deposited on a PDMS (Polydimethylsiloxane) chip with nanowells while an overlay of oil is applied to prevent dehydration. A similar approach has been applied for single protein counting and single cell analyses. Single size-controlled drops also constitute 'micro-reactors' in which various components can be enclosed in an isolated environment and are of high interest in the microfluidics field, which often reverts to PDMS technology.

PDMS is a versatile elastomeric material that is widely used for its ease of manipulation, its very good contour accuracy (<10 nm), chemical inertness, thermal stability, and homogeneity even when producing microstructures (see Schneider et al., Sensors and Actuators A: Physical 151, 95-99 (2009); and Mata et al., Biomed. Microdevices 7, 281-293 (2005)). Moreover, PDMS is characterized by a low curing temperature, high flexibility, and it is a visibly transparent material. However, its most remarkable feature is its hydrophobicity with a water contact angle of 110°. For these reasons it is widely used from the electronic to the biomedical field, mechanobiology and microfluidics. Often modified by chemical or physical means, it has been recently coated with a polydopamine layer to promote its cytocompatibility and thus its interaction with mammalian cells (Chuah et al., Scientific Reports 5, 18162 (2015)).

The inclusion of a liquid or gel phase in a polymeric material allows not only the modification of the mechanical properties of a material but even the generation of soft liquid composites (SLC) with special properties and functionalities. The Eshelby's inclusion theory predicts the mechanical properties of an elastic material embedded in an elastic host matrix. Extended to consider the role of surface tension when the embedded material is a liquid, Dufresne's group (Robert W. Style et al, Soft Matter, 2015, 11, 672, Robert W. Style et al, Nature Physics 11, 82-87 (2015)) showed that the inclusion of liquid droplets in the matrix can actually increase the macroscopic apparent stiffness of a solid. Recent studies are even focusing on the effect of inclusions on the stiffness of the overall material. Soft bioinspired composite in the form of thin films can provide a wide range of tunable mechanical properties with features similar to human epidermis and may form the basis of sensing materials and bio-integrated electronics.

Presently used approaches for generating inclusions in solid materials focus on the use of the emulsion technique which requires a phase separation process by the combination of water in oil liquids (or the contrary) for the generation of droplets in the matrix. With this technique, there is no control of the size and localization of the droplets in the matrix.

Mazurek et al. (Polymer 87, (2016) 1-7) teaches the generation of a green and cheap silicone-based elastomeric composite material with uniformly distributed glycerol droplets prepared by mixing a stable mixture of PDMS pre-polymer and biodiesel-originating glycerol.

Gerber et al. (Angew. Chem. Int. Ed. 2012, 51, 11293-11296) describes the incorporation of penicillin-producing fungi into liquified agar that is subsequently covered with a thin layer of acrylate polymer for producing sustained antibiotic-releasing surfaces.

Lay and Rogach (ACS Appl. Mater. Interfaces, 2017, 9,11309-11320) review hydrogel-based materials for the delivery of herbal medicines.

It is the objective of the present invention to provide new and improved composite inclusion materials with controlled properties, preferably controlled size, position and/or composition of the inclusion materials.

This objective is solved by a method for the controlled deposition of liquid droplets in polymer compositions for forming droplet polymer composite compositions, comprising the steps of:
(i) providing an unpolymerized pre-polymer composition,
(ii) providing a liquid for droplet formation in the unpolymerized pre-polymer composition,
(iii) controlled deposition of the liquid in the form of discrete droplets on the surface of or into the unpolymerized pre-polymer composition,
(iv) time-controlled settlement of the deposited discrete liquid droplets within the unpolymerized pre-polymer composition, and
(v) controlled polymerization of the pre-polymer composition comprising the settling discrete droplets,
wherein
(a) the liquid for droplet formation and the unpolymerized pre-polymer composition are immiscible,
(b) the discrete liquid droplets are deposited on the surface of or into the pre-polymer composition to form a one, two or three-dimensional pattern within the unpolymerized pre-polymer composition by settlement, and
(c) the density of the liquid for droplet formation at 20 °C is at least 5 % higher than the density of the pre-polymer composition at 20 °C.

The unpolymerized pre-polymer composition for use in the present invention can be any composition suitable for forming polymers and/or any composition suitable for changing from a physical state that allows the droplets to pass through the composition, e.g. a liquid, viscous or gel-like state, to a physical state in which the droplets are arrested in their position within the composition, e.g. a solid or gel-like state. Of course, the solid state of the polymer composition can be rigid, flexible, pliable or elastic. Also, the composition may consist of or comprise further non-polymeric compounds such as, e.g. clay, glue, particles, fibers, or cement. Additionally, the pre-polymer composition may comprise the curing agent that might be necessary for or assist polymerization.

The droplets may be added on the surface of the pre-polymer composition, e.g. by deposition of drops from a syringe, or they may be injected into the pre-polymer composition using, e.g. a needle. In the context of the present invention, adding the droplets "on the surface of the pre-polymer composition" means that the droplets can be deposited at the interface between the pre-polymer composition and air/gas or an upper, e.g. standing, liquid that is optionally present on top of the pre-polymer composition. The term liquid includes gel-like states and semi-solid states. During or after the time-controlled settlement of the deposited liquid droplets in the method of the present invention, the droplets may optionally solidify or, e.g. if they consist of or comprise prepolymers themselves, polymerize.

The droplets may be added on the surface of the pre-polymer composition, e.g. by deposition of drops from a syringe, or they may be injected into the pre-polymer composition using, e.g. a needle. Injecting the droplets into the pre-polymer composition is not meant to replace the time-controlled deposition process but can be practiced to, e.g. avoid contact of the droplets with air, e.g. in the case of oxygen-sensitive droplet compositions.

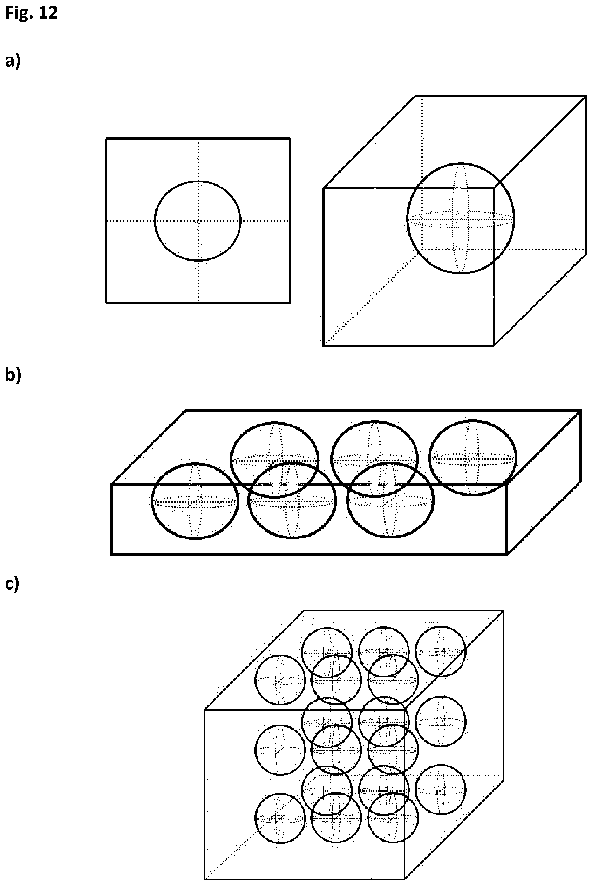

Of course, the speed of settlement, of polymerization of the pre-polymer composition and of solidification of the droplets can be coordinated and/or each of these speeds can be controlled separately. The position of the droplets (Fig. 12a) within the polymer composition can be controlled relative to each other and two- and/or three-dimensionally to form an array of droplets as depicted in Fig. 12 b) and c).

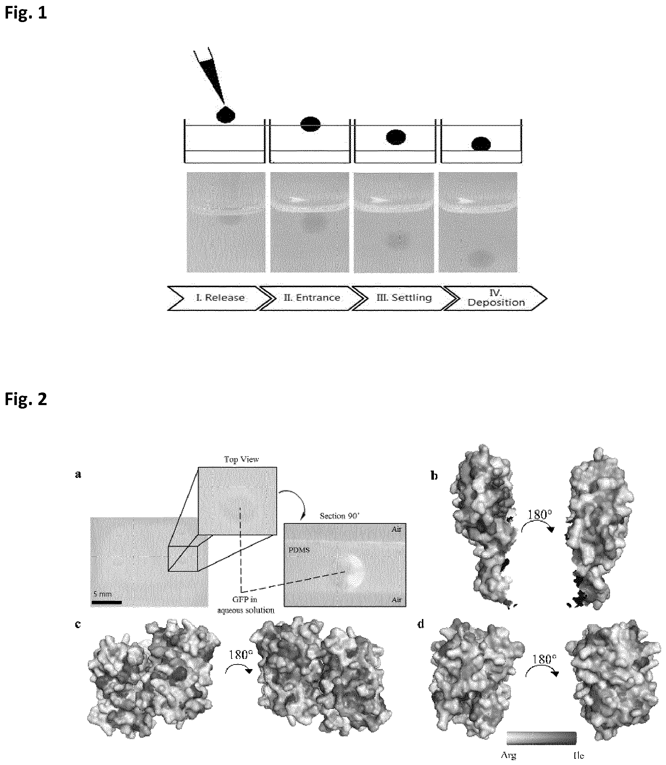

It is within the scope of the present invention that the pre-polymer composition polymerizes during the settlement of the droplets or after the droplets have adopted a desired position within the pre-polymer composition. Fig. 1 schematically shows the inclusion of a compound-containing, liquid droplet in a polymer composition.

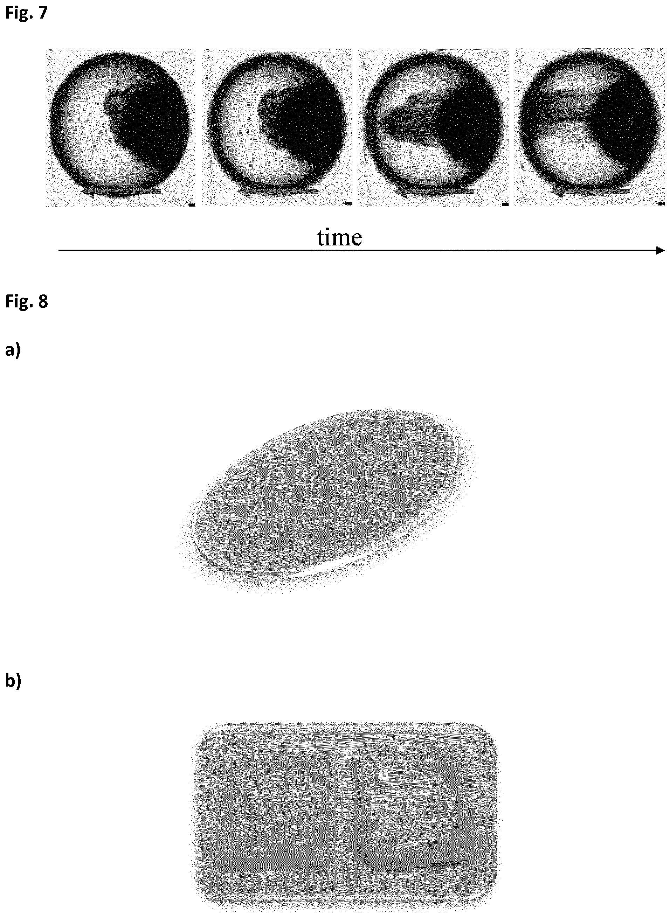

Also, the position of the droplets within the polymer composition may be, e.g. additionally, controlled by other properties of the material comprised within the droplets, e.g. by magnetic properties. Fig. 7 shows an example how magnet material-comprising droplets can also be controlled in their position by application of a magnetic field. Thus, the settlement of the liquid droplets within the pre-polymer composition can optionally be, e.g. additionally and/or specifically, guided by other means than gravity or difference in density between the droplets and the pre-polymer composition.

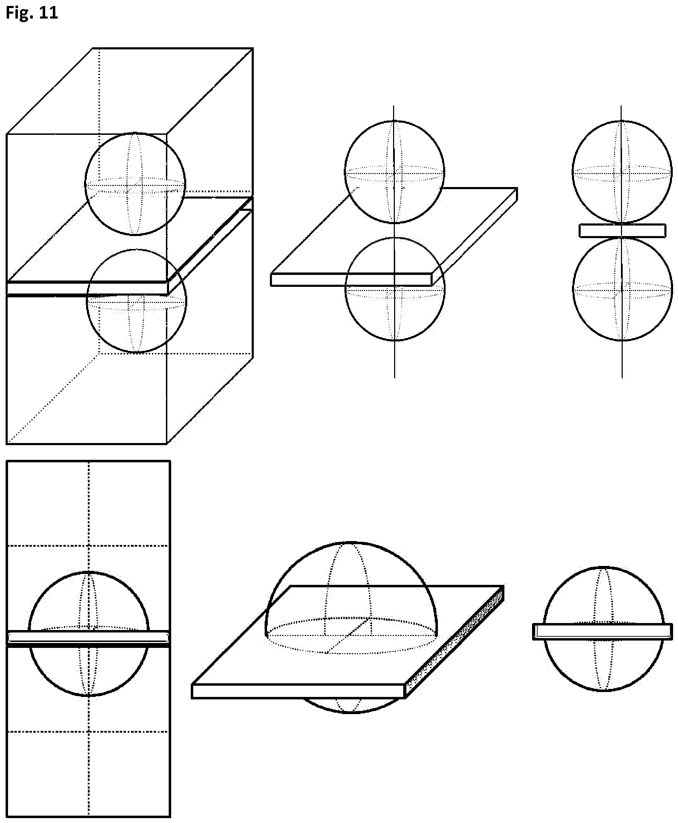

In the context of the present invention, the droplets are discrete with respect to the pre-polymer composition. The term "discrete" as used in the context of droplets for use in the present invention means that the droplets are substantially immiscible with the unpolymerized pre-polymer composition. It is preferred that the physico-chemical or activity-based properties of the discrete liquid droplets within the unpolymerized and polymerized (pre-)polymer composition are preserved during and/or after settlement of the droplets within the (pre-)polymer composition. It is within the scope of the term discrete that two or more droplets may touch each other at their circumference, forming a "double-bubble", or together form one coalescent droplet (Fig. 11). Also, the difference in density between the droplets and the pre-polymer composition can cause the droplets to move through the pre-polymer composition, e.g. by following gravity.

The term "controlled deposition" as used herein indicates that the deposition of the droplets is controlled with regard to their initial positioning, i.e. spatial allocation, on the surface of or into the unpolymerized pre-polymer composition.

The term "controlled polymerization of the pre-polymer composition" as used herein indicates that the polymerization of the pre-polymer composition is controlled with regard to the polymerization speed, the polymerization degree, and/or location of polymerization within the pre-polymer composition, e.g. within minutes or hours, fully/partially polymerized, homogenous or heterogenous distribution of polymerization throughout the pre-polymer composition.

Unlike gel electrophoresis that uses an electric field, charged solid particles and a pre-polymerized polymer that sieves the charged particles according to their size, the present invention makes use of an un-polymerized pre-polymer to which liquid droplets are added. Also in contrast to the present invention, size exclusion chromatography or gel-filtration chromatography makes use of a pre-polymerized polymer to which solid particles are added which are then separated according to their size. These prior art methods are not suitable for the controlled deposition of liquid droplets in polymer compositions.

The advantage of the present invention is that liquid droplets of different compositions and size can be embedded within a polymer composition (a) under control of the position of the droplets within the composition and relative to each other and (b) with no risk of unwanted fusion, mixing with the polymer composition or cross-contamination. Therefore, the present method is especially useful for the development of functional materials from magnetic materials to photonic crystals, batteries, storage of solutions, biosensors, microreactors (etc.) as outlined further below.

In a preferred embodiment of the present invention, the density of the liquid for droplet formation at 20 °C is at least 10, preferably at least 20, more preferably at least 30 % higher than the density of the pre-polymer composition at 20 °C. The density of the pre-polymer/polymer composition is known in the art and some representative densities are provided below.

Densities at 25 °C in g/cm³: PDMS: 0.965; PMMA: 1.18; glycerol: 1.26; polypropylene: 0.946; chitosan: 0.15 - 0.3 (low/high molecular weight); polyvinyl alcohol: 1.19; lipids: HDL 1.063 - 1.210, LDL 1.006 - 1.063; gelatin: 1.3 - 1.4. Also, the skilled person can determine the density of any given polymer composition by routine experiments known in the art. The densities of common organic solvents are provided in the table below (reproduced from http://www.organicdivision.org/orig/ organic_solvents.html)

### Common Organic Solvents: Table of Properties^{1,2,3}

| **Solvent** | **formula** | **MW** | **boiling point (°C)** | **melting point (°C)** | **density (g/mL)** | **solubility in water (g/100g)** | **Dielectric flash point Constant (°C)** | |
|---|---|---|---|---|---|---|---|---|
| | | | | | | | **3,4** | |
| acetic acid | C₂H₄O₂ | 60.052 | 118 | 16.6 | 1.0446 | Miscible | 6.20 | 39 |
| acetone | C₃H₆O | 58.079 | 56.05 | -94.7 | 0.7845 | Miscible | 21.01 | -20 |
| acetonitrile | C₂H₃N | 41.052 | 81.65 | -43.8 | 0.7857 | Miscible | 36.64 | 6 |
| benzene | C₆H₆ | 78.11 | 80.1 | 5.5 | 0.8765 | 0.18 | 2.28 | -11 |
| 1-butanol | C₄H₁₀O | 74.12 | 117.7 | -88.6 | 0.8095 | 6.3 | 17.8 | 37 |
| 2-butanol | C₄H₁₀O | 74.12 | 99.5 | -88.5 | 0.8063 | 15 | 17.26 | 24 |
| 2-butanone | C₄H₈O | 72.11 | 79.6 | -86.6 | 0.7999 | 25.6 | 18.6 | -9 |
| t-butyl alcohol | C₄H₁₀O | 74.12 | 82.4 | 25.7 | 0.7887 | Miscible | 12.5 | 11 |
| carbon tetrachloride | CCl₄ | 153.82 | 76.8 | -22.6 | 1.594 | 0.08 | 2.24 | -- |
| chlorobenzene | C₆H₅Cl | 112.56 | 131.7 | -45.3 | 1.1058 | 0.05 | 5.69 | 28 |
| chloroform | CHCl₃ | 119.38 | 61.2 | -63.4 | 1.4788 | 0.795 | 4.81 | -- |
| cyclohexane | C₆H₁₂ | 84.16 | 80.7 | 6.6 | 0.7739 | <0.1 | 2.02 | -20 |
| 1,2-dichloroethane | C₂H₄Cl₂ | 98.96 | 83.5 | -35.7 | 1.245 | 0.861 | 10.42 | 13 |
| diethylene glycol | C₄H₁₀O₃ | 106.12 | 246 | -10 | 1.1197 | 10 | 31.8 | 124 |
| diethyl ether | C₄H₁₀O | 74.12 | 34.5 | -116.2 | 0.713 | 7.5 | 4.267 | -45 |
| diglyme (diethylene glycol dimethyl ether) | C₆H₁₄O₃ | 134.17 | 162 | -68 | 0.943 | Miscible | 7.23 | 67 |
| 1,2-dimethoxy-ethane (glyme, DME) | C₄H₁₀O₂ | 90.12 | 84.5 | -69.2 | 0.8637 | Miscible | 7.3 | -2 |
| dimethyl-formamide (DMF) | C₃H₇NO | 73.09 | 153 | -60.48 | 0.9445 | Miscible | 38.25 | 58 |
| dimethyl sulfoxide (DMSO) | C₂H₆OS | 78.13 | 189 | 18.4 | 1.092 | 25.3 | 47 | 95 |
| 1,4-dioxane | C₄H₈O₂ | 88.11 | 101.1 | 11.8 | 1.033 | Miscible | 2.21(25) | 12 |
| ethanol | C₂H₆O | 46.07 | 78.5 | -114.1 | 0.789 | Miscible | 24.6 | 13 |
| ethyl acetate | C₄H₈O₂ | 88.11 | 77 | -83.6 | 0.895 | 8.7 | 6(25) | -4 |
| ethylene glycol | C₂H₆O₂ | 62.07 | 195 | -13 | 1.115 | Miscible | 37.7 | 111 |
| glycerin | C₃H₈O₃ | 92.09 | 290 | 17.8 | 1.261 | Miscible | 42.5 | 160 |
| heptane | C₇H₁₆ | 100.20 | 98 | -90.6 | 0.684 | 0.01 | 1.92 | -4 |
| Hexamethylphosph-oramide (HMPA) | C₆H₁₈N₃OP | 179.20 | 232.5 | 7.2 | 1.03 | Miscible | 31.3 | 105 |
| Hexamethylphosph-orous triamide (HMPT) | C₆H₁₈N₃P | 163.20 | 150 | -44 | 0.898 | Miscible | ?? | 26 |
| hexane | C₆H₁₄ | 86.18 | 69 | -95 | 0.659 | 0.014 | 1.89 | -22 |
| methanol | CH₄O | 32.04 | 64.6 | -98 | 0.791 | Miscible | 32.6(25) | 12 |
| methyl *t*-butyl ether (MTBE) | C₅H₁₂O | 88.15 | 55.2 | -109 | 0.741 | 5.1 | ?? | -28 |
| methylene chloride | CH₂Cl₂ | 84.93 | 39.8 | -96.7 | 1.326 | 1.32 | 9.08 | 1.6 |
| *N*-methyl-2-pyrrolidinone (NMP) | CH₅H₉NO | 99.13 | 202 | -24 | 1.033 | 10 | 32 | 91 |
| nitromethane | CH₃NO₂ | 61.04 | 101.2 | -29 | 1.382 | 9.50 | 35.9 | 35 |
| pentane | C₅H₁₂ | 72.15 | 36.1 | -129.7 | 0.626 | 0.04 | 1.84 | -49 |
| Petroleum ether (ligroine) | -- | -- | 30-60 | -40 | 0.656 | -- | -- | -30 |
| 1-propanol | C₃H₈O | 88.15 | 97 | -126 | 0.803 | Miscible | 20.1(25) | 15 |
| 2-propanol | C₃H₈O | 88.15 | 82.4 | -88.5 | 0.785 | Miscible | 18.3(25) | 12 |
| pyridine | C₅H₅N | 79.10 | 115.2 | -41.6 | 0.982 | Miscible | 12.3(25) | 17 |
| tetrahydrofuran (THF) | C₄H₈O | 72.106 | 65 | -108.4 | 0.8833 | 30 | 7.52 | -14 |
| toluene | C₇H₈ | 92.14 | 110.6 | -93 | 0.867 | 0.05 | 2.38(25) | 4 |
| triethyl amine | C₆H₁₅N | 101.19 | 88.9 | -114.7 | 0.728 | 0.02 | 2.4 | -11 |
| water | H₂O | 18.02 | 100.00 | 0.00 | 0.998 | -- | 78.54 | -- |
| water, heavy | D₂O | 20.03 | 101.3 | 4 | 1.107 | Miscible | ?? | -- |
| *o*-xylene | C₈H₁₀ | 106.17 | 144 | -25.2 | 0.897 | Insoluble | 2.57 | 32 |
| *m*-xylene | C₈H₁₀ | 106.17 | 139.1 | -47.8 | 0.868 | Insoluble | 2.37 | 27 |
| *p*-xylene | C₈H₁₀ | 106.17 | 138.4 | 13.3 | 0.861 | Insoluble | 2.27 | 27 |

In a further preferred embodiment, the method of the present invention is one, wherein the polymer for the polymer composition is selected from the group consisting of
(a) polymers selected from the group consisting of cellulose, dextran, chitosan, collagen, silk, keratin, elastin, natural rubber, preferably latex, polyvinyl alcohols, styrenes, preferably acrylonitrile butadiene styrene and styrene ethylene butylene styrene (SEBS), and combinations thereof;
(b) elastomers, thermoplastics, preferably polypropylene and polyacrylates, more preferably propylene-ethylene co-polymers and poly(methyl methacrylate) (PMMA), thermosetting polymers, polysiloxanes, silicones, RTV silicones, polydimethylsiloxanes (PDMS), polyurethanes, and combinations thereof;
(c) epoxy resins;
(d) gelatinous substances, preferably selected from the group consisting of gelatin, agar, agarose, collagens and combinations thereof;
(e) hydrogels; and
(f) combinations thereof;
preferably chitosan, PDMS and combinations thereof, more preferably PDMS.

The polymer composition for use in the present invention may also comprise different layers of differently composed polymers. For example, layers of polymers of different densities or other physical properties may be comprised within the polymer composition. Furthermore, it is within the scope of the invention that individual sections or layers of the pre-polymer are polymerized before or after other sections or layers of the pre-polymer, e.g. by site-specific application of light or heat.

In a further preferred embodiment, the method of the present invention is one, wherein the liquid is an aqueous liquid, preferably an aqueous liquid comprising glycerol, more preferably an aqueous liquid comprising at least 20, at least 30, at least 40, or at least 50 % glycerol by weight.

Alternatively, the liquid for use in the present invention can be non-aqueous and/or comprise organic solvents, e.g. chlorofluorocarbons (CFCs), hydrochlorofluorocarbons (HCFCs) or hydrofluorocarbons (HFCs). Furthermore, ionic liquids are within the scope of the present invention.

In another preferred embodiment, the method of the present invention further comprises step (Ila) of providing a basal layer of a polymerized polymer composition, preferably in a thickness of 0.01 to 10 mm, more preferably 0.2 to 2 mm, most preferably 0.1 to 1 mm, preferably from the polymer composition of step (i), and superimposing the basal layer with the unpolymerized pre-polymer composition of step (i).

It is also preferred that the layer onto which the droplets are added (the top layer) is pre-polymerized, preferably in a thickness of 0.01 to 10 mm, more preferably 0.2 to 2 mm, most preferably 0.1 to 1 mm.

In a further preferred embodiment, the method of the present invention is one, wherein the unpolymerized pre-polymer composition is PDMS, the liquid for droplet formation is an aqueous composition comprising glycerol, preferably comprising at least 20, more preferably at least 30 or at least 40, most preferably at least 50 % glycerol, and wherein the controlled polymerization of step (v) is done at room temperature, preferably at 16 to 28 °C, more preferably at 18 to 25, most preferably at 20 to 22 °C, until polymerization is complete, preferably for more than 20 hours, more preferably for about 2 days.

In a further preferred embodiment, the method of the present invention is one, wherein the controlled polymerization step (v) is done under conditions selected from the group consisting of: 20 to 30, preferably about 25 °C for 45 to 55, preferably about 48 h; 90 to 110, preferably about 100°C for 30 to 40, preferably about 35 min; 110 to 140, preferably about 125°C for 10 to 30, preferably about 20 min; and 130 to 170, preferably about 150°C for about 5 to 15, preferably about 10 min.

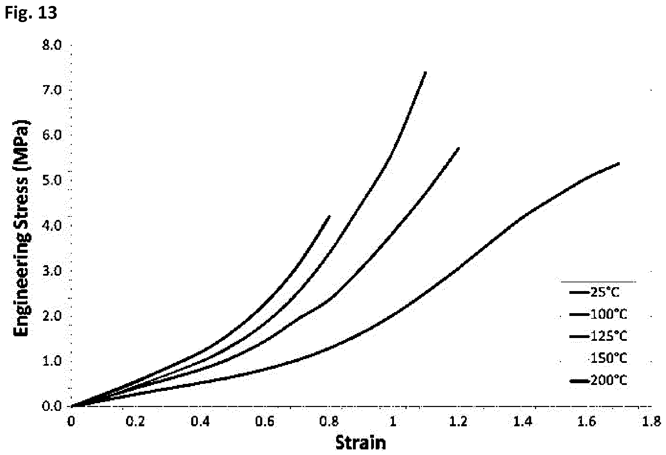

The different temperatures during polymerization influence the PDMS mechanical properties (see Fig. 13) and can therefore be selected according to the desired properties of the polymer composition.

In a further preferred embodiment, the method of the present invention is one, wherein the controlled deposition of the liquid in the form of discrete droplets on the surface of or into the un-polymerized pre-polymer composition results in discrete droplets of controlled size, controlled three-dimensional position, and/or controlled substance composition. The term "size" as used herein refers to the three-dimensional size of the droplet(s) and also encompasses the volume of the droplets.

The three-dimensional array or pattern can be diligently controlled as depicted in Figs. 8, 10 and 12.

In a further preferred embodiment, the method of the present invention is one, wherein the liquid for droplet formation comprises a compound selected from the group consisting of water, lipids, preferably LDL and HDL, polymers, preferably temperature-responsive polymers and light-responsive polymers, inorganic particles, preferably titanium dioxide particles, oils, light generating compounds, light sensitive compounds, electrically conductive compounds, biological or synthetic fluorophores, pigments, magnetic particles, medicaments, peptides, proteins, living tissue, living organisms, cells, bacteria, fungi and spores.

In a further aspect, the present invention is directed to a droplet-loaded polymer material prepared by a method according to the present invention, e.g. as described above.

In another aspect, the present invention is directed to a use of the droplet-loaded polymer material according to the present invention for the preparation of
(a) drug delivery materials, preferably selected from the group consisting of drug delivery patches, vaccine patches, preferably patches comprising the polymers dextran and chitosan, optical lenses, preferably eye lenses, and artificial skin;
(b) synthetic organs, preferably artificial kidneys or lungs;
(c) microreactors for chemical reactions, preferably for a catalytic or biocatalytic reaction, more preferably forming part of sensing devices;
(d) multiunit storage reservoirs, preferably for the storage of therapeutic agents, more preferably therapeutic molecules, proteins, antibodies or enzymes;
(e) filter materials, preferably for water filtration or body liquids filtration, more preferably blood filtration;
(f) exchange materials, preferably liquid/liquid, gas/liquid or gas/gas exchanging materials;
(g) living mats comprising cells, bacteria, fungi and/or spores, preferably living mats for light or fluorescence generation, for current or conductivity generation or for filtering, preferably water filtering;
(h) magnetic materials comprising magnetic droplets, preferably magnetic nanoparticles, nanorods, nanotubes, nanofibers or magnetic clusters;
(i) photonic crystals, preferably three-dimensional optical photonic crystals, more preferably for color generation or pixel generation; and
(j) data storage devices, preferably for storing data by the two- or three-dimensional arrangement of droplets.

Also, the present invention encompasses any of the above materials including a droplet-loaded polymer material according to the present invention.

The droplet-loaded materials according to the present invention can be used for **drug delivery** (see Fig. 8), e.g. to generate an artificial sweating skin by simulating the sweat glands or by using micro-needles. Also, vaccine patches with controlled drug release properties can be prepared from droplet-loaded materials of the present invention.

**Active lenses** with eye pressure monitoring and drug release abilities can be prepared using the materials of the present invention. Self-reporting materials based on a bio-hybrid polymer-biomolecule combination that signals an applied pressure as a change of fluorescence can be used to monitor eye pressure in a continuous and low-cost manner. Based on the introduction of droplets comprising fluorescent molecules (e.g. chemical dyes or proteins) into an elastomeric polymer film, an applied pressure can be correlated to a variation of fluorescence, e.g. intensity, colour, or FRET signal (Figs. 2-5 and 10). Biocompatible materials such as PDMS, and fluorescent proteins such as GFP-variants and C-phycocyanin can be combined to develop a self-reporting material able to monitor pressure in the physiological range found in the eye.

In the context of the present invention, films consisting of bilayered drug delivery patches composed of a PDMS reservoir containing liquid active principles and a chitosan-dextran film were used and demonstrated to deliver a drug at controlled times. The composite films investigated showed excellent potential as a dressing with controllable degradation and release of active principles to further enhance wound healing. The degradation layer is based on the use of dextran and chitosan which also display great potential in wound healing.

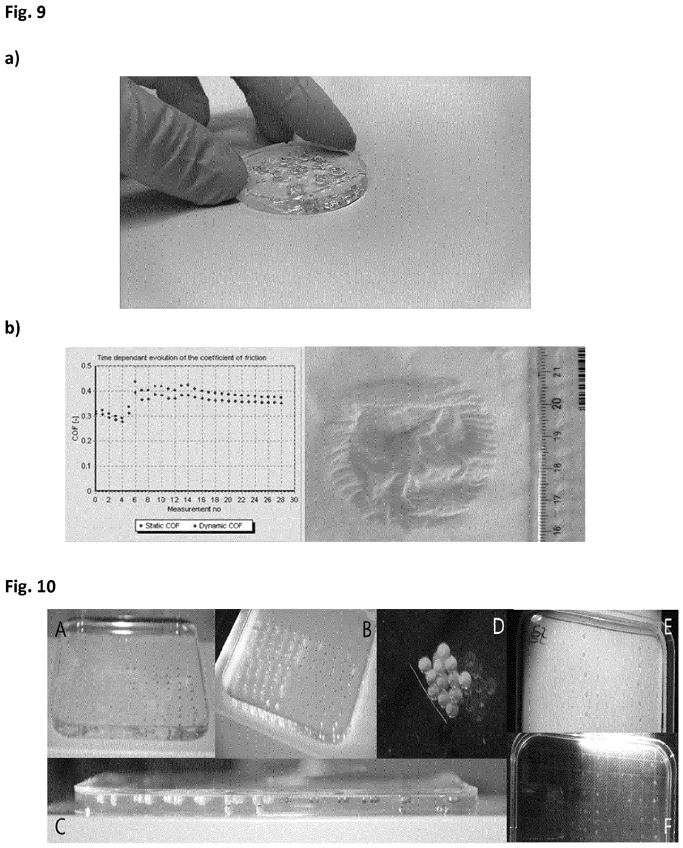

A new bio-mimicking **composite skin** can also be prepared using materials according to the present invention, consisting of an elastomeric, pressure-triggered sweating system and a water-responsive layer composed of gelatin and textile (see Figs. 9a) and b)). The skin model undergoes the same skin-specific changes caused by prolonged water exposure; it swells, smoothens, softens and follows the same changes in the frictional behavior. A water-responsive, pressure-triggered sweating artificial skin can also be applied instead of or next to the conventional *in vivo* investigations focusing on the influence of various atmospheric conditions and sports activities on skin properties and frictional behavior. Moreover, it can act as a suitable system to better understand the influence of water on human skin properties and performance.

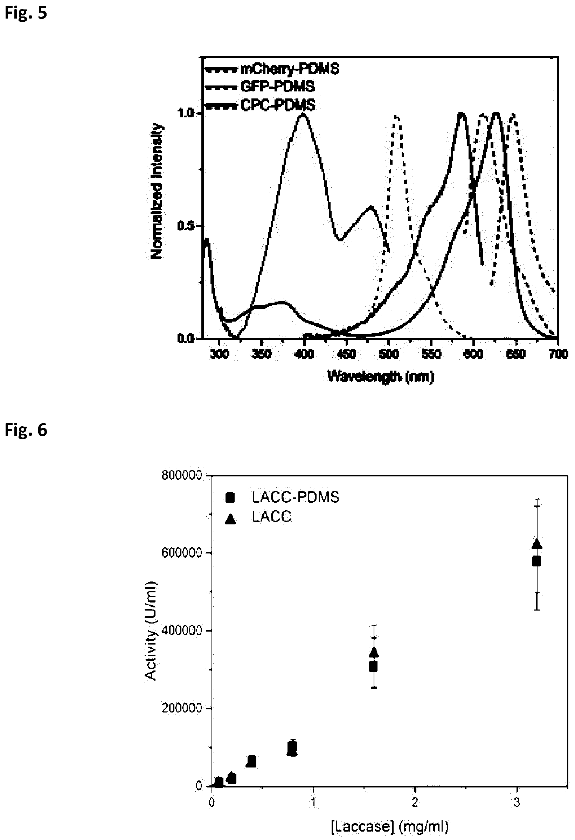

The droplet-loaded materials can be used to generate new species by **mixing substances** for chemical reactions such as, for example, the reaction of enzymes such as lactase (Fig. 6) or the generation of gold nanoparticles forming a network of gold spheres. Also, nano-micro reactions can be realized in droplet-size confinements.

The droplet-loaded materials can further be used as **reservoirs,** for storage of liquids in a solid phase avoiding alteration, degradation and contamination. By this way the use of preservatives can be highly reduced or avoided. Several weeks of storage without degradation or reduction of activity of the introduced substances can be achieved.

Combination of two inclusions separated by a membrane which can be activated by external stimulation (e.g. by pH, light or temperature) can also be prepared using materials of the present invention. The activation (switch on/off) of the membrane allows to release or **filter liquids or gases** and by this way represents an exchanger consisting of spheres (use of liquid droplets for the generation of spheres) generated in elastomeric polymeric materials. Exchangers between liquid/liquid, gas/liquid and finally gas/gas interfaces can be prepared. This filter technique can also be applied for preparing artificial kidneys (liquid/liquid exchanger) or lungs (liquid/air exchanger).

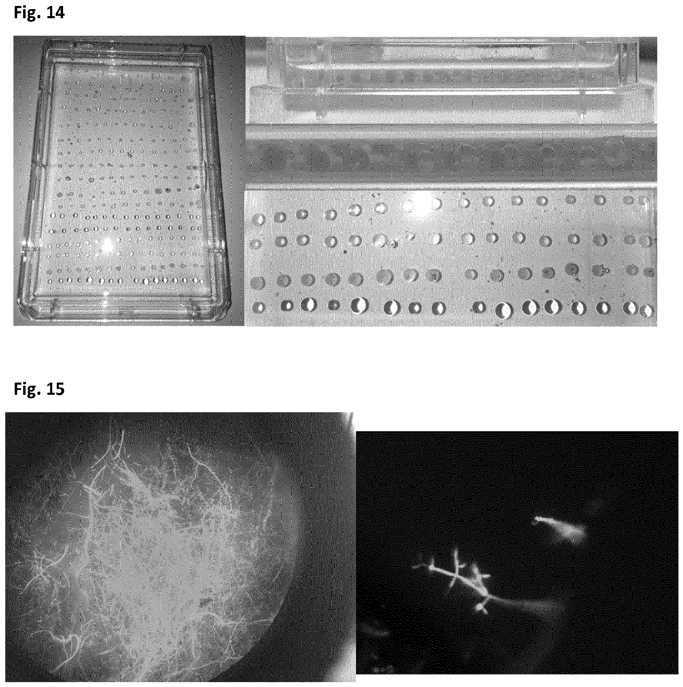

**Living materials** (see Figures 14 and 15) can be included in the droplets according to the present invention. The living materials for introduction into droplets are, e.g. cells, bacteria, fungi and/or spores to form "living mats". Applications of these living mats are, e.g. light or fluorescence generation or energy generation based on living materials able to generate current or conductivity, e.g. in the context of microbial full cells (batteries) based on bio-electrochemical systems. Living mats can also be used for water filtration. Also, the living organisms can be released from the polymeric material in a controlled manner.

Inclusions-loaded mats containing **magnetic particles** can also be prepared according to the present invention. The magnetic properties of the magnetic particles in the droplets can, e.g. be used for the displacement of droplets during the polymerization phase or the organization of magnetic nanoparticles in droplets following magnetic field lines (see Fig. 7).

3D optical **photonic crystals** can be realized by adding several stacked layers of droplet-loaded polymer compositions. Droplet-based photonic devices can be prepared by the addition of droplet-loaded stacking layers for color generation or pixels for new TV screen displays. The combination of the Red, Green and Blue colors can be used for the generation of white light.

The materials of the present invention can also be used for **data coding** by defining precise sequences or two- or three-dimensional arrays of droplets or by random generations of sequences or two- or three-dimensional arrays of droplets.

**Generation of droplet-loaded polymer compositions by FluidFM technology** (see André Meister et al, Nano Letters, 2009, Vol.9, No. 6, 2501-2507; Orane Guillaume-Gentil et al, Trends in Biotechnology, July 2014, Vol. 32, No. 7; Raphael R. Grüter et al, Nanoscale, 2013, 5, 1097)

Based on a classical research grade AFM, the FluidFM technology allows the generation of controlled micro-nano sized droplets. This advanced solution allows the combination of an AFM with microfluidics capabilities. Adding the possibility to work in liquid and with cells, the FluidFM technology integrates an innovative hollow AFM cantilever able to release in a controlled manner liquids or air (up to femtoliter volume release). This technology can be used to generate droplet-loaded polymer compositions with unprecedented sizes that are not achievable by prior art methods such as spotting, nanolithography and micro/nano patterning.

In the following, the present invention is illustrated by way of specific and representative examples, none of which are to be considered as limiting the present invention beyond the scope of the appended claims.

### Figures

**Fig. 1** schematically shows the inclusion of a compound-containing, e.g. a biomolecule-containing, aqueous solution in PDMS. Above a thin layer of pre-polymerized PDMS, a liquid PDMS mixture is placed and droplets of compound-containing aqueous solutions are deposited and settle by gravity.
**Figs. 2a** **to d** show molecules included in PDMS as droplets in liquid form. Deposited as 6 droplets with 10 µl volume, aqueous solutions containing the fluorescent protein GFP were stored in PDMS as micro-sized spherical droplets. Surface hydrophobicity of the fluorescent proteins used in the study CPC (b, with bilin cofactor as blue spheres), GFP (c), and mCherry (d) were visualized according to the normalized Eisenberg hydrophobicity scale (Eisenberg et al., J. Mol. Biol. 179, 125-142 (1984)).
**Fig. 3** is a picture showing the inclusion of fluorescent proteins in PDMS by lateral illumination with an XX lamp. The fluorescence of the biomolecule was also visually detected.
**Fig. 4** shows the concentration-dependent fluorescence of GFP embedded in PDMS.
**Fig. 5** shows the absorbance and fluorescence spectra of fluorescent proteins GFP, CPC and mCherry inclusions in PDMS.
**Fig. 6** shows the inclusion of the biocatalyst laccase and the concentration-dependent activity of laccase as included sample (LACC-PDMS) and as untreated enzyme solution (LACC) incubated under identical conditions.
**Fig. 7** is a time-dependent set of photographs demonstrating that the movement of nanoparticles included as droplets can be controlled by an external magnetic field (red arrow) and visualized by optical microscopy. Droplet volume: 10 µL.
**Fig. 8 a)** and **b)** are photographs of droplet-loaded patches ready for release in drug delivery systems, e.g. for skin wound dressing.
Fig. 9: a) is a photo of an artificial sweating skin patch able to release liquids under applied pressure. **b)** is an illustration of the liquid release during friction measurements (left) or on paper by direct applied pressure (right).
**Fig. 10 a)** to **f)** are illustration of PDMS membranes containing protein-loaded droplets for FRET.
**Fig. 11** depicts different configurations and three-dimensional arrangements of droplets (depicted as spheres) in polymer compositions. The droplets are discrete and can, e.g. be spaced apart or can touch one another at their circumference. The droplets can be separated by a supplementary layer which can be activated by different stimuli (light, temperature, etc.) for opening or closing.
**Fig. 12 a)** is a scheme of a single droplet included in a polymer composition and shows how the deposition of a single droplet on a liquid viscous unpolymerized material allows the control of the size, position and the substance of the droplet. **b)** depicts the deposition of multiple droplets generating organized arrays with control of their sizes, positions and substances. **c)** depicts a three-dimensionally organized droplet array.
**Fig. 13** depicts the influence of the curing temperature, i.e. the temperature during polymerization, on the PDMS mechanical properties (reproduced from I. D. Johnston, D. K. McCluskey, C. K. L. Tan and M. C. Tracey, mechanical characterization of bulk for microfluidics and microengineering, J. Micromech. Microeng. 24 (2014).
**Fig. 14** shows the inclusion of living bioluminescent fungi (*Trichoderma harzianum-gfp*) in polydimethylsiloxane (PDMS). Three different concentrations of fungal solutions are used. The transparent droplets correspond to glycerol droplets used as a blank. Bioluminescent fungi in liquid solutions are incorporated during the liquid pre-polymerized phase of the PDMS. The fungal mycelium can grow in this soft liquid composite material and the growth can be monitored by following the fluorescent intensity. The fluorescent activity can also be used to monitor and control the release properties of these living microorganisms.
**Fig. 15** shows bioluminescent fungal structures (*Trichoderma harzianum-gfp*) under the microscope.

### Examples

Specifically, the below examples relate to a method for the deposition of biomolecules as liquid droplets in PDMS films to generate SLC (soft liquid composite) materials. The formation and storage of these exemplary biomolecules in aqueous droplets is achieved without surfactants or detergents that might compromise their bioactivity. The method is illustrated for three different fluorescent proteins and the biotechnologically-relevant catalyst laccase. The methods were carried out under mild conditions with regards to temperature, pH, and pressure, thus conforming the suitability of the method for the controlled inclusion of even sensitive biological entities.

### Example 1 - PDMS gels preparation and droplet formation

The Sylgard 184 kit including PDMS monomer and curing agent was purchased from Dow Corning. For polydimethylsiloxane (PDMS) fabrication the base and curing agent were mixed with a 10:1 ratio by weight and poured into a mold. The PDMS is cured for at least 48 h at room temperature. Paramagnetic particles were purchased from Polyscience (Cat. #18879).

### Example 2 - Fluorescent biomolecules production

The fluorescent proteins α-subunit of C-phycocyanin from *Synechocystis* sp. PCC6803, the His-tagged version of GFPuv (GFP), and mCherry were recombinantly expressed in *E. coli* BL21(DE3) as described in Faccio et al., RSC Adv. 5, 22319-22325 (2015). CPC, GFP and mCherry were all expressed with a hexa-histidine tag and purified by nickel-affinity chromatography using an Äkta Purifier system and Histrap columns (GE Healthcare) as described in Faccio et al. (see above).

### Example 3 - Protein analytics and quantification

Spectrophotometric UV-Vis analyses were with a 96-well plate reader using a 200 µl sample at 22°C. Fluorescence measurements were performed using black half-area multiwell-plates with a 100 µl sample and with λex=609 nm and λem=400-700 nm. GFPuv concentration was determined using Nanodrop (Thermo Scientific) and an extinction coefficient ε=27000 M-1 cm-1 at 280 nm and a calculated molecular mass of 27862 g mol⁻¹. CPC concentration was determined from the absorbance at 620 nm using an extinction coefficient ε^{1%}₆₂₀ = 70. mCherry was quantified using an extinction coefficient ε=35870 M-1 cm-1 at 280 nm, as calculated with the software Protparam40.

### Example 4 - Imaging

Images for intensity analysis were taken with a LS Reloaded Microarray Scanner (Tecan, Switzerland) equipped with three lasers at 635 nm, 532 nm, 488 nm, Images were also acquired with a microscope Leica DM6000 fitted with a digital camera (Leica DM6000, Wetzlar, Germany) and equipped with a GFP (λex=450-490 nm, λem=525-550 nm) and N2.1 filter (λex=515-560 nm, λem≥590 nm).

### Example 5 - Enzymatic activity

Laccase from *Trametes versicolor* (product nr. 38429) and chemicals were purchased from Sigma Aldrich (Buchs, Switzerland). Laccase activity was measured using ABTS as substrate in Mcllvaine buffer pH 4 at room temperature. Enzymatic activity was calculated with a molar extinction coefficient of 36000 M⁻¹ cm⁻¹ for oxidized ABTS.

### Example 6 - Inclusion process

The controlled deposition of an aqueous solution within an unpolymerized PDMS polymer composition required a difference of density between liquid droplet and unpolymerized polymer material to drive the settling of the liquid droplet (see Fig. 1). Initial screening experiments identified glycerol as a suitable compound providing both increased density (glycerol density d = 1,26 g/cm³ and PDMS density d = 0.97 g/cm³ at 20°C) and conformational stabilization of the biomolecules applied. Moreover, PDMS and glycerol were selected for this example for their properties of incom-pressibility and immiscibility. Glycerol was added at a concentration of 50% to all the aqueous samples to be investigated. In order to provide a first basal layer of PDMS (0.5-1 mm thickness) the unpolymerized PDMS composition was poured in the mold and kept at room temperature for curing under mild conditions, e.g. room temperature (22°C) for 48 h. Once cured, a second unpolymerized PDMS composition was dispensed to reach an approximate 1:5 volume to volume ratio with the basal layer. As an alternative to degassing, air inclusions were let spontaneously displace at the surface and, when no longer visible (after about 30 min incubation), drops of the chosen compound, i.e. biomolecule-containing aqueous glycerol solutions were dispensed on the surface of the viscous unpolymerized PDMS composition using a micropipette. The deposition of the liquid droplets was thus realized before polymerization of the PDMS, during a defined period of time where PDMS remains in a liquid viscous state and the position of the droplet can be controlled as its reaches the basal layer. The samples were subsequently incubated at 22°C for 2 days for curing. By controlling the volume of the droplet (e.g. from 1 to 20 µL), liquid inclusions of spherical shape and different size can be achieved (Fig. 1).

### Example 7 - Inclusion of fluorescent proteins and characterization

Fluorescent proteins were used as representative model compound to investigate the effect of inclusion on biomolecules. Variants of fluorescent proteins were engineered to respond to temperature, oxidative environment, and metabolites. Fluorescent proteins CPC, mCherry, and GFP (Fig. 2) were selected for different fluorescent properties. This fluorescence can be perturbed by, among other phenomena, the interaction with a material surface. The fluorescent proteins have a molecular surface showing, although well distributed, hydrophobic regions that might drive the interaction with the PDMS surface (Fig. 2). Droplets with volumes of 1-20 µl were deposited giving raise to inclusions of 0.3-2 mm in diameter. For routine preparations, a drop size of 20 µl was used as it contained sufficient solution to carry out the characterization.

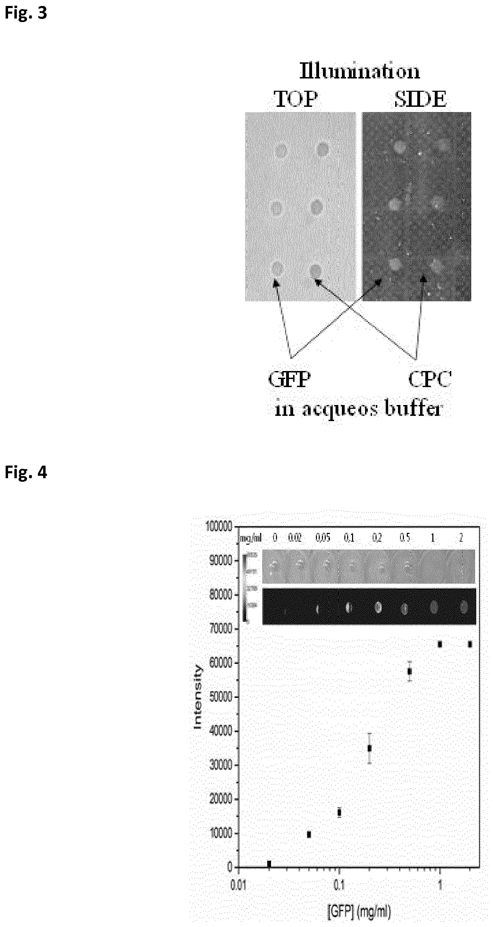

All CPC, GFP and mCherry deposited as droplets in PDMS retained their characteristic light absorption and fluorescence properties (Fig. 3), e.g. as reported for the untreated proteins that have a max of absorbance/fluorescence of 620/640 nm, 395/509 nm, and 587/610. Fluorescence could be also visually detected in the material upon illumination (Fig. 4). In addition to being measurable with a fluorimeter, this could be quantified using a microarray scanner. Droplets containing different concentrations of GFP in a concentration of 0 to 2 mg/ml were deposited and the correlation between concentration and emitted fluorescence was not affected by the deposition process (Fig. 5).

### Example 8 - Inclusion of a biocatalyst

Enzymes are biomolecules carrying out biocatalytic reactions. Solutions of a fungal laccase with concentrations ranging from 0 to 3.2 mg/ml were included in liquid droplet/PDMS polymer compositions and the residual activity studied and compared to an identical untreated enzyme solution. Even if the inclusion process required 2 days for polymerization and incubation at room temperature, the enzyme solution included in PDMS still showed a statistically significantly comparable residual activity of the untreated solutions (Fig. 6).

The deposition of laccase (pl = 3.535) in liquid droplets in PDMS did not lead to any loss of enzymatic activity when compared to the untreated equivalent solution (Fig. 6). The laccase solution was prepared in 50% glycerol, 100 mM K-phosphate pH 7.5, a condition far from the isoelectric point of the protein. In addition, the glycerol present in the droplet at a high concentration might add, with its amphiphilic nature, to the retention of the biomolecules in the liquid phase, as it can shield the hydrophobicity of the PDMS surface from interacting with the hydrophobic regions of the proteins.

### Example 9 - Inclusion of nanoparticulate material

The possibility of including liquid droplets in a material, paves the way for the inclusion of traceable elements whose behavior can be influenced by external triggers. Nanoparticles have been introduced into static droplets for stirring at a microliter scale within seconds and to control droplet motion on surfaces. By including aqueous solution in PDMS compositions containing superparamagnetic nanoparticles, the localization and orientation of these were externally controlled with a magnet to swirl the solution within the droplet (Fig. 7).

## Claims

1. Method for the controlled deposition of liquid droplets in polymer compositions for forming droplet polymer composite compositions, comprising the steps of:
(i) providing an unpolymerized pre-polymer composition,
(ii) providing a liquid for droplet formation in the unpolymerized pre-polymer composition,
(iii) controlled deposition of the liquid in the form of discrete droplets on the surface of or into the unpolymerized pre-polymer composition,
(iv) time-controlled settlement of the deposited discrete liquid droplets within the unpolymerized pre-polymer composition, and
(v) controlled polymerization of the pre-polymer composition comprising the settling discrete droplets,
wherein
(a) the liquid for droplet formation and the unpolymerized pre-polymer composition are immiscible,
(b) the discrete liquid droplets are deposited on the surface of or into the pre-polymer composition to form a one, two or three-dimensional pattern within the unpolymerized pre-polymer composition by settlement, and
(c) the density of the liquid for droplet formation at 20 °C is at least 5 % higher than the density of the pre-polymer composition at 20 °C.

2. The method of claim 1, wherein the density of the liquid for droplet formation at 20 °C is at least 10, preferably at least 20, more preferably at least 30 % higher than the density of the pre-polymer composition at 20 °C.

3. The method according to any of claims 1 and 2, wherein the polymer for the polymer composition is selected from the group consisting of
(a) polymers selected from the group consisting of cellulose, dextran, chitosan, collagen, silk, keratin, elastin, natural rubber, preferably latex, polyvinyl alcohols, styrenes, preferably acrylonitrile butadiene styrene and styrene ethylene butylene styrene (SEBS), and combinations thereof;
(b) elastomers, thermoplastics, preferably polypropylene and polyacrylates, more preferably propylene-ethylene co-polymers and poly(methyl methacrylate) (PMMA), thermosetting polymers, polysiloxanes, silicones, RTV silicones, polydimethylsiloxanes (PDMS), polyurethanes, and combinations thereof;
(c) epoxy resins;
(d) gelatinous substances, preferably selected from the group consisting of gelatin, agar, agarose, collagens and combinations thereof;
(e) hydrogels; and
(f) combinations thereof;
preferably chitosan, PDMS and combinations thereof, more preferably PDMS.

4. The method according to any of claims 1 to 3, wherein the liquid is an aqueous liquid, preferably an aqueous liquid comprising glycerol, more preferably an aqueous liquid comprising at least 20, at least 30, at least 40, or at least 50 % glycerol by weight.

5. The method according to any of claims 1 to 4, further comprising step (Ila) of providing a basal layer of a polymerized polymer composition, preferably in a thickness of 0.01 to 10 mm, more preferably 0.2 to 2 mm, most preferably 0.1 to 1 mm, preferably from the polymer composition of step (i), and superimposing the basal layer with the unpolymerized pre-polymer composition of step (i).

6. The method of any of claims 1 to 5, wherein the unpolymerized pre-polymer composition is PDMS, the liquid for droplet formation is an aqueous composition comprising glycerol, preferably comprising at least 20, more preferably at least 30 or at least 40, most preferably at least 50 % glycerol, and wherein the controlled polymerization of step (v) is done at room temperature, preferably at 16 to 28 °C, more preferably at 18 to 25, most preferably at 20 to 22 °C, until polymerization is complete, preferably for more than 20 hours, more preferably for about 2 days.

7. The method according to any one of claims 1 to 6, wherein the controlled deposition of the liquid in the form of discrete droplets on the surface of or into the unpolymerized pre-polymer composition results in discrete droplets of controlled size, controlled three-dimensional position, and/or substance composition.

8. The method according to any of claims 1 to 7, wherein the liquid for droplet formation comprises a compound selected from the group consisting of water, lipids, preferably LDL and HDL, polymers, preferably temperature-responsive polymers and light-responsive polymers, inorganic particles, preferably titanium dioxide particles, oils, light generating compounds, light sensitive compounds, electrically conductive compounds, biological or synthetic fluorophores, pigments, magnetic particles, medicaments, peptides, proteins, living tissue, living organisms, cells, bacteria, fungi and spores.

9. Droplet-loaded polymer material prepared by a method according to any of claims 1 to 8.

10. Use of the droplet-loaded polymer material according to claim 9 for the preparation of
(a) drug delivery materials, preferably selected from the group consisting of drug delivery patches, vaccine patches, preferably patches comprising the polymers dextran and chitosan, optical lenses, preferably eye lenses, and artificial skin;
(b) synthetic organs, preferably artificial kidneys or lungs;
(c) microreactors for chemical reactions, preferably for a catalytic or biocatalytic reaction, more preferably forming part of sensing devices;
(d) multiunit storage reservoirs, preferably for the storage of therapeutic agents, more preferably therapeutic molecules, proteins, antibodies or enzymes;
(e) filter materials, preferably for water filtration or body liquids filtration, more preferably blood filtration;
(f) exchange materials, preferably liquid/liquid, gas/liquid or gas/gas exchanging materials;
(g) living mats comprising cells, bacteria, fungi and/or spores, preferably living mats for light or fluorescence generation, for current or conductivity generation or for filtering, preferably water filtering;
(h) magnetic materials comprising magnetic droplets, preferably magnetic nanoparticles, nanorods, nanotubes, nanofibers or magnetic clusters;
(i) photonic crystals, preferably three-dimensional optical photonic crystals, more preferably for color generation or pixel generation; and
(j) data storage devices, preferably for storing data by the two- or three-dimensional arrangement of droplets.

## Patentansprüche

1. Verfahren für die kontrollierte Abscheidung von flüssigen Tröpfchen in Polymerzusammensetzungen zur Bildung von Polymertropfenkompositzusammensetzungenm, umfassend die Schritte:
(i) des Bereitstellens einer unpolymerisierten Präpolymerzusammensetzung,
(ii) des Bereitstellens einer Flüssigkeit zur Tropfenbildung in der unpolymerisierten Präpolymerzusammensetzung,
(iii) des kontrollierten Abscheidens der Flüssigkeit in der Form von diskreten Tröpfchen auf der Oberfläche von der oder in die unpolymerisierte Präpolymerzusammensetzung,
(iv) des zeitlich kontrollierten Absetzens der abgeschiedenen diskreten Flüssigkeitströpfchen innerhalb der unpolymerisierten Präpolymerzusammensetzung, und
(v) die kontrollierte Polymerisation der Präpolymerzusammensetzung, die die sich setzenden diskreten Tröpfchen umfasst,
wobei
(a) die Flüssigkeit zur Tröpfchenbildung und die unpolymerisierte Präpolymerzusammensetzung nicht mischbar sind,
(b) die diskreten Flüssigkeitstropfen auf der Oberfläche von oder in der Präpolymerzusammensetzung abgeschieden werden, um ein ein-, zwei- oder dreidimensionales Muster innerhalb der unpolymerisierten Präpolymerzusammensetzung durch Absetzen zu bilden, and
(c) die Dichte der Flüssigkeit für die Tröpfchenbildung bei 20 °C mindestens 5 % höher als die Dichte der Präpolymerzusammensetzung bei 20 °C ist.

2. Das Verfahren von Anspruch 1, wobei die Dichte der Flüssigkeit für die Tröpfchenbildung bei 20 °C mindestens 10, vorzugsweise mindestens 20, besonders bevorzugt mindestens 30 % höher als die Dichte der Präpolymerzusammensetzung bei 20 °C ist.

3. Das Verfahren nach einem der Ansprüche 1 und 2, wobei das Polymer für die Polymerzusammensetzung aus der Gruppe ausgewählt ist, bestehend aus
(a) Polymeren, ausgewählt aus der Gruppe bestehend aus Cellulose, Dextran, Chitosan, Kollagen, Seide, Keratin, Elastin, Naturkautschuk, vorzugsweise Latex, Polyvinylalkoholen, Styrolen, vorzugsweise Acrylnitril-Butadien-Styrol und Styrol-Ethylen-Butylen-Styrol (SEBS), und Kombinationen davon;
(b) Elastomeren, Thermoplasten, vorzugsweise Polypropylen und Polyacrylaten, besonders bevorzugt Propylen-Ethylen-Copolymeren und Poly(methylmethacrylat) (PMMA), duroplastischen Polymeren, Polysiloxanen, Silikonen, RTV-Silikonen, Polydimethylsiloxanen (PDMS), Polyurethanen und Kombinationen davon;
(c) Epoxidharzen;
(d) gelatinösen Stoffen, vorzugsweise ausgewählt aus der Gruppe bestehend aus Gelatine, Agar, Agarose, Kollagenen und Kombinationen davon;
(e) Hydrogelen; und
(f) Kombinationen davon;
vorzugsweise Chitosan, PDMS und Kombinationen davon, besonders bevorzugt PDMS.

4. Das Verfahren nach einem der Ansprüche 1 bis 3, wobei die Flüssigkeit eine wässrige Flüssigkeit ist, vorzugsweise eine wässrige Flüssigkeit, die Glycerin umfassst, besonders bevorzugt eine wässrige Flüssigkeit, die mindestens 20, mindestens 30, mindestens 40 oder mindestens 50 Gewichtsprozent Glycerin umfassst.

5. Das Verfahren nach einem der Ansprüche 1 bis 4, ferner umfassend den Schritt (Ila) des Bereitstellens einer Basisschicht aus einer polymerisierten Polymerzusammensetzung, vorzugsweise in einer Dicke von 0,01 bis 10 mm, mehr bevorzugt 0,2 bis 2 mm, am meisten bevorzugt 0,1 bis 1 mm, vorzugsweise aus der Polymerzusammensetzung von Schritt (i), und des Überlagerns der Basisschicht mit der unpolymerisierten Präpolymerzusammensetzung von Schritt (i).

6. Das Verfahren nach einem der Ansprüche 1 bis 5, wobei die unpolymerisierte PräpolymerZusammensetzung PDMS ist, die Flüssigkeit zur Tröpfchenbildung eine Glycerin enthaltende wässrige Zusammensetzung ist, die vorzugsweise mindestens 20, weiter bevorzugt mindestens 30 oder mindestens 40, am meisten bevorzugt mindestens 50 % Glycerin enthält, und wobei die kontrollierte Polymerisation von Schritt (v) bei Raumtemperatur, vorzugsweise bei 16 bis 28 °C, weiter bevorzugt bei 18 bis 25, am meisten bevorzugt bei 20 bis 22 °C, durchgeführt wird, bis die Polymerisation abgeschlossen ist, vorzugsweise für mehr als 20 Stunden, am meisten bevorzugt für etwa 2 Tage.

7. Das Verfahren nach einem der Ansprüche 1 bis 6, wobei die kontrollierte Abscheidung der Flüssigkeit in der Form von diskreten Tröpfchen auf der Oberfläche von oder in der unpolymerisierten Prepolymer-Zusammensetzung zu diskreten Tröpfchen mit kontrollierter Größe, kontrollierter dreidimensionaler Position und/oder Substanzzusammensetzung führt.

8. Das Verfahren nach einem der Ansprüche 1 bis 7, wobei die Flüssigkeit zur Tröpfchenbildung eine Verbindung umfasst, die aus der Gruppe ausgewählt ist, die aus Wasser, Lipiden, vorzugsweise LDL und HDL, Polymeren, vorzugsweise temperaturempfindlichen Polymeren und lichtempfindlichen Polymeren, anorganischen Teilchen, vorzugsweise Titandioxidteilchen, Ölen, lichterzeugenden Verbindungen, lichtempfindlichen Verbindungen, elektrisch leitfähigen Verbindungen, biologischen oder synthetischen Fluorophoren, Pigmenten, magnetischen Teilchen, Arzneimitteln, Peptiden, Proteinen, lebendem Gewebe, lebenden Organismen, Zellen, Bakterien, Pilzen und Sporen besteht.

9. Mit Tröpfchen beladenes Polymermaterial, hergestellt durch ein Verfahren nach einem der Ansprüche 1 bis 8.

10. Verwendung des tröpfchenbeladenen Polymermaterials nach Anspruch 9 zur Herstellung von
(a) Materialien zur Arzneimittelfreisetzung, vorzugsweise ausgewählt aus der Gruppe bestehend aus arzneimittelfeisetzenden-Pflastern, Impfstoff-Pflastern, vorzugsweise Pflastern, die die Polymere Dextran und Chitosan umfassen, optischen Linsen, vorzugsweise Augenlinsen, und künstlicher Haut;
(b) synthetischen Organen, vorzugsweise künstlichen Nieren oder Lungen;
(c) Mikroreaktoren für chemische Reaktionen, vorzugsweise für eine katalytische oder biokatalytische Reaktion, die vorzugsweise Teil von Sensorvorrichtungen sind;
(d) Speicherbehältern mit mehreren Einheiten, vorzugsweise für die Lagerung von therapeutischen Wirkstoffen, insbesondere von therapeutischen Molekülen, Proteinen, Antikörpern oder Enzymen;
(e) Filtermaterialien, vorzugsweise zur Wasserfiltration oder zur Filtration von Körperflüssigkeiten, insbesondere zur Blutfiltration;
(f) Austauschmaterialien, vorzugsweise Materialien, die Flüssigkeit/Flüssigkeit, Gas/Flüssigkeit oder Gas/Gas austauschen;
(g) lebenden Matten, die Zellen, Bakterien, Pilze und/oder Sporen umfassen, vorzugsweise lebende Matten zur Licht- oder Fluoreszenzerzeugung, zur Strom- oder Leitfähigkeitserzeugung oder zum Filtern, vorzugsweise zum Filtern von Wasser;
(h) magnetischen Materialien, die magnetischen Tröpfchen umfassen, vorzugsweise magnetische Nanopartikeln, Nanostäbchen, Nanoröhren, Nanofasern oder magnetischen Clustern;
(i) photonischen Kristallen, vorzugsweise dreidimensionale optische photonische Kristalle, vorzugsweise zur Farberzeugung oder Pixelerzeugung; und
(j) Datenspeichervorrichtungen, vorzugsweise zum Speichern von Daten durch die zwei- oder dreidimensionale Anordnung von Tröpfchen.

## Revendications

1. Procédé de dépôt contrôlé de gouttelettes de liquide dans des compositions polymères pour former des compositions composites de polymère en gouttelettes, comprenant les étapes de :
(i) fourniture d'une composition de pré-polymère non polymérisée,
(ii) fourniture d'un liquide pour la formation de gouttelettes dans la composition de pré-polymère non polymérisée,
(iii) régulation du dépôt du liquide sous la forme de gouttelettes discrètes sur la surface ou dans la composition de pré-polymère non polymérisée,
(iv) sédimentation, de manière régulée dans le temps, des gouttelettes de liquide discrètes déposées à l'intérieur de la composition de pré-polymère non polymérisée, et
(v) réguler la polymérisation de la composition de pré-polymère comprenant les gouttelettes discrètes en sédimentation,
dans lequel
(a) le liquide pour la formation de gouttelettes et la composition de pré-polymère non polymérisée ne sont pas miscibles,
(b) les gouttelettes de liquide discrètes sont déposées sur la surface ou dans la composition de pré-polymère pour former par sédimentation un motif à une, deux ou trois dimensions à l'intérieur de la composition de pré-polymère non polymérisée, et
(c) la densité du liquide pour la formation de gouttelettes à 20 °C est d'au moins 5 % supérieure à la densité de la composition de pré-polymère à 20 °C.

2. Procédé selon la revendication 1, dans lequel la densité du liquide pour la formation de gouttelettes à 20 °C est d'au moins 10, préférablement d'au moins 20, plus préférablement d'au moins 30 % supérieure à la densité de la composition de pré-polymère à 20 °C.

3. Procédé selon l'une quelconque des revendications 1 et 2, dans lequel le polymère pour la composition polymère est sélectionné dans le groupe constitué :
(a) des polymères sélectionnés dans le groupe constitué de la cellulose, du dextrane, du chitosane, du collagène, de la soie, de la kératine, de l'élastine, du caoutchouc d'origine naturelle, préférablement du latex, des poly(alcools de vinyle), des styrènes, préférablement de l'acrylonitrile-butadiène-styrène et du styrène-éthylène-butylène-styrène (SEBS), et de leurs combinaisons ;
(b) des élastomères, des thermoplastiques, préférablement du polypropylène et des polyacrylates, plus préférablement des co-polymères de propylène-éthylène et du poly(méthacrylate de méthyle) (PMMA), des polymères thermodurcis, des polysiloxanes, des silicones, des silicones RTV, des polydiméthylsiloxanes (PDMS), des polyuréthanes, et de leurs combinaisons ;
(c) des résines époxy ;
(d) des substances gélatineuses, préférablement sélectionnées dans le groupe constitué de la gélatine, de l'agar-agar, de l'agarose, des collagènes et de leurs combinaisons ;
(e) des hydrogels ; et
(f) de leurs combinaisons ;
préférablement du chitosane, du PDMS et de leurs combinaisons, plus préférablement du PDMS.

4. Procédé selon l'une quelconque des revendications 1 à 3, dans lequel le liquide est un liquide aqueux, préférablement un liquide aqueux comprenant du glycérol, plus préférablement un liquide aqueux comprenant au moins 20, au moins 30, au moins 40, ou au moins 50 % de glycérol en poids.

5. Procédé selon l'une quelconque des revendications 1 à 4, comprenant en outre l'étape (IIa) consistant à fournir une couche basale d'une composition polymère polymérisée, préférablement en une épaisseur de 0,01 à 10 mm, plus préférablement de 0,2 à 2 mm, de manière préférée entre toutes de 0,1 à 1 mm, préférablement de la composition polymère de l'étape (i), et à superposer la couche basale sur la composition de pré-polymère non polymérisée de l'étape (i).

6. Procédé selon l'une quelconque des revendications 1 à 5, dans lequel la composition de pré-polymère non polymérisée est du PDMS, le liquide pour la formation de gouttelettes est une composition aqueuse comprenant du glycérol, comprenant préférablement au moins 20, plus préférablement au moins 30 ou au moins 40, de manière préférée entre toutes au moins 50 % de glycérol, et dans lequel la polymérisation contrôlée de l'étape (v) est effectuée à la température ambiante, préférablement à 16 à 28 °C, plus préférablement à 18 à 25, de manière préférée entre toutes à 20 à 22 °C, jusqu'à ce que la polymérisation soit achevée, préférablement durant plus de 20 heures, plus préférablement durant environ 2 jours.

7. Procédé selon l'une quelconque des revendications 1 à 6, dans lequel le dépôt régulé du liquide sous la forme de gouttelettes discrètes sur la surface ou dans la composition de pré-polymère non polymérisée résulte en gouttelettes discrètes de taille régulée, de position tridimensionnelle régulée, et/ou de composition de substances régulée.

8. Procédé selon l'une quelconque des revendications 1 à 7, dans lequel le liquide pour la formation de gouttelettes comprend un composé sélectionné dans le groupe constitué de l'eau, des lipides, préférablement des LDL et HDL, des polymères, préférablement des polymères thermosensibles et des polymères photosensibles, des particules inorganiques, préférablement des particules de dioxyde de titane, des huiles, des composés générant de la lumière, des composés photosensibles, des composés électriquement conducteurs, des fluorophores biologiques ou de synthèse, des pigments, des particules magnétiques, des médicaments, des peptides, des protéines, des tissus vivants, des organismes vivants, des cellules, des bactéries, des champignons et des spores.

9. Matériau polymère chargé de gouttelettes préparé par un procédé selon l'une quelconque des revendications 1 à 8.

10. Utilisation du matériau polymère chargé de gouttelettes selon la revendication 9 pour la préparation
(a) de matériaux d'administration de médicaments, préférablement sélectionnés dans le groupe constitué des timbres d'administration de médicaments, des timbres vaccinaux, préférablement des timbres comprenant les polymères dextrane et chitosane, des lentilles optiques, préférablement des lentilles oculaires, et de la peau artificielle ;
(b) d'organes de synthèse, préférablement de reins ou de poumons artificiels ;
(c) de microréacteurs pour des réactions chimiques, préférablement pour une réaction catalytique ou biocatalytique, plus préférablement constituant une partie de dispositifs de détection ;
(d) de réservoirs de stockage à unités multiples, préférablement pour le stockage d'agents thérapeutiques, plus préférablement de molécules, de protéines, d'anticorps ou d'enzymes thérapeutiques ;
(e) de matériaux filtrants, préférablement pour la filtration de l'eau ou la filtration de liquides corporels, plus préférablement la filtration du sang ;
(f) de matériaux d'échange, préférablement de matériaux d'échange liquide/liquide, gaz/liquide ou gaz/gaz ;
(g) de mats vivants comprenant des cellules, des bactéries, des champignons et/ou des spores, préférablement des mats vivants pour la génération de lumière ou de fluorescence, pour la génération de courant ou de conductivité ou pour la filtration, préférablement la filtration de l'eau ;
(h) de matériaux magnétiques comprenant des gouttelettes magnétiques, préférablement des nanoparticules magnétiques, des nanotiges, des nanotubes, des nanofibres ou des amas magnétiques ;
(i) de cristaux photoniques, préférablement de cristaux photoniques optiques tridimensionnels, plus préférablement pour la génération de couleur ou la génération de pixel ; et
(j) de dispositifs de stockage de données, préférablement pour le stockage de données par des configurations bi ou tridimensionnelles de gouttelettes.
